# EUROPEAN PATENT SPECIFICATION

(11) **EP 4 028 322 B1**
(45) Date of publication and mention of the grant of the patent: **27.03.2024**
(21) Application number: 19766228.1
(22) Date of filing: 09.09.2019
(51) Int. Cl.: B63H 1/20, B63H 1/26

(54) **MARINE VESSEL PROPELLER, PROPELLER BLADE AND METHOD FOR INSTALLING THE MARINE VESSEL PROPELLER**
SCHIFFSPROPELLER, PROPELLERBLATT UND VERFAHREN ZUR MONTAGE DES SCHIFFSPROPELLERS
HÉLICE DE NAVIRE, PALE D'HÉLICE ET PROCÉDÉ D'INSTALLATION DE L'HÉLICE DE NAVIRE

(43) Date of publication of application: 20.07.2022
(73) Proprietor: Wärtsilä Norway AS, 5420 Rubbestadneset (NO)
(72) Inventor: VOGELS, Robert, 5151 DM Drunen (NL)
(74) Representative: Genip Oy
(86) International application number: PCT/EP2019/073971
(87) International publication number: WO 2021/047750

(56) References cited:
- CN-A- 106 347 612
- GB-A- 1 482 375
- KR-A- 20150 100 021
- US-A- 2 892 503

## Description

### Technical field

The present invention relates to marine vessel propeller to convert an engine rotational power into a propulsive force, according to the preamble of claim 1. The present invention relates also to a method for installing the marine vessel propeller.

### Background art

The present invention relates to a propulsion system for large marine vessels having engine power in a range from one megawatt up to tens of megawatts and propeller diameter from one meter up to ten meters. Each vessel's hull has its own characteristics. In order to achieve the highest possible overall efficiency of the vessel, the propeller must be perfectly matched with the engine and hull. Propeller design is always tailored to the specific application. There are three different basic type of propellers for these vessels, fixed pitch, controllable pitch and built-up propellers each having their own characteristics.

A fixed pitch propeller (FPP) is the choice when optimum efficiency, reliability, robustness and low costs are required and when the operational parameters of the vessel are known in advance i.e. when designing the vessel and the propeller. Fixed pitch propellers are usually installed for ocean going vessels, for example: container vessels, tankers, bulk carriers, dry cargo vessels and passenger liners. Manufacturing of a large diameter fixed pitch propeller is demanding and lead time to finish such propeller is long.

Controllable pitch propeller (CPP) systems provide excellent performance and manoeuvrability and are recommended for vessels with frequent sailing routes that involve multiple operating conditions. These can be, for example, vessels requiring full power in both bollard pull and freesailing conditions, or that make frequent port calls. Controllable pitch propeller systems can also be applicable for vessels that encounter varying weather conditions or demanding operational requirements such as dynamic positioning. A controllable pitch propeller is often the optimal choice for installations with a shaft generator operating at constant rotational speed. Full propulsion power is available in both heavy and light conditions through an automatic pitch adjustment. Engine overload is avoided regardless of the conditions. The CPP is the ideal choice for diesel-mechanic propulsion with both medium-speed and low-speed diesel engines.

Built-up propeller (BUP) is basically a fixed pitch propeller (FPP) that is not a single piece i.e. monobloc casting but with separate casted propeller blades bolted to a hub part. BUPs are an attractive alternative for monobloc fixed pitch propellers. BUP comprises blades that are connected towards the propeller shaft with a flange and fit bolts. Most BUPs for are delivered with 4- and 5-blades propellers, but 6-bladed propellers are also available. BUPs are typically supplied in stainless steel or bronze. There are no particular production related propeller diameter or weight limits.

Built-up propellers are typically installed on ice-breakers and offshore patrol vessels that operate in ice infested waters or operational areas with increased risk of propeller damage. As the damaged propeller need to be repaired or even replaced, a BUP provides several advantages over a monobloc fixed pitch propeller. Naturally long interruption of the vessel operating is highly unwanted. Limited replacement time enables the vessel to maintain its schedule, which is beneficial for vessels with a fixed operating schedule such as cruise vessels and ferries.

A proper BUP design enables that only a single damaged BUP blade can be changed or demounted for repair. A possibility of under water (de)mounting enable the BUP blades to be replaced or repaired without long interruption to the normal operating service. Underwater propeller blade installation and replacement allows faster vessel service since no dry-docking is needed. In case of propeller damage a single BUP blade is easier to transport and handle than a full sized monobloc fixed pitch propeller. A limited storage space is also required because of spare blades. Even an on-board storage of spare blades is an option. These factors make a BUP a feasible alternative for propellers that suffer from frequent damage because of collisions.

Galvanic corrosion needs to be taken into consideration when designing products for marine use. Dissimilar metals and alloys have different electrode potentials, and when two or more come into contact in an electrolyte (sea water), one metal acts as anode and the other as cathode. The electropotential difference between the reactions at the two electrodes is the driving force for an accelerated attack on the anode metal, which dissolves into the electrolyte. This leads to the metal at the anode corroding more quickly than it otherwise would and corrosion at the cathode being inhibited. The presence of an electrolyte and an electrical conducting path between the metals is essential for galvanic corrosion to occur. The electrolyte provides a means for ion migration whereby ions move to prevent charge build-up that would otherwise stop the reaction. There are several ways of reducing and preventing galvanic corrosion. One option is to electrically insulate the two metals from each other. If they are not in electrical contact, no galvanic coupling will occur. This can be achieved by using non-conductive materials between metals of different electropotential. Components can be isolated with plastic materials or made of metal material internally coated or lined. Another option is to ensure that there is no contact with an electrolyte. This can be done by using water-repellent compounds such as greases, or by coating the metals with an impermeable protective layer, such as a suitable paint or plastic. If it is not possible to coat both, the coating should be applied to the more noble, the material with higher potential. This is advisable because if the coating is applied only on the more active material, in case of damage to the coating there will be a large cathode area and a very small anode area, and for the exposed anodic area the corrosion rate will be correspondingly high. It may be possible try to choose metals that have similar electropotentials. The more closely matched the individual potentials, the smaller the potential difference and hence the smaller the galvanic current. Using the same metal for all construction is the easiest way of matching potentials but it is also the more costly way. Electroplating or other plating can also help. This tends to use more noble metals that resist corrosion better. Chrome, nickel, silver and gold can all be used. Galvanizing with zinc protects the steel base metal by sacrificial anodic action.

Patent publication KR1020150100021A relates to a propeller for a ship. A plurality of blades composed of a composite material is inserted into a coupling portion of a hub composed of a metal material in advance of a separation preventing device inserted into the coupling portion of the hub, and the blades and the separation preventing device are coupled to the coupling portion of the hub with a coupling bolt to smoothly replace only the damaged blade when the blade is damaged. According to one preferred embodiment of the present invention, the propeller for a ship comprises: the hub having a '├'-shaped side surface, having a central inner hollow portion to be fixated to a driving shaft connected to an engine of the ship or a motor to integrally be rotated; blades coupled to the outside of protrusions of the hub in a radial direction to generate propulsion; a separation preventing device positioned to come in contact with one side surface of the blades coupled to the outside of the protrusions of the hub to prevent the blade from being separated from the hub; and the coupling bolt fixating the blades and the separation preventing device to integrally be connected to the hub.

Patent publication KR1020150100016A relates to a hubless propeller. The present invention comprises: a propeller wing module where one propeller wing is formed in an integrated coupling unit of a divided hub structure; and a coupling ring formed on a center region of a shaft to be coupled and separated from a lower end protrusion of the propeller wing module. The propeller wing module is formed by the same number of the divided hub to be coupled and separated from the shaft, thus the propeller wing module where the existing propeller wing and the hub are integrally formed is easily coupled and separated from the shaft to easily be processed. Moreover, the present invention uses the propeller wing module in order to easily process an entire propeller, and easily replaces the propeller when a specific propeller wing is damaged.

Patent publication CN106347612 A (WO2018059198A1) discloses a ship detachable ship propeller, which solves the technical problem that the propeller maintenance and repair in the prior art is inconvenient, time-consuming and labor intensive, and high in cost. A detachable ship propeller includes a hub 2 and a blade 1. The bottom end of the blade 1 is connected with an arc-shaped mounting plate 3, and the mounting plate 3 is provided. The hub 2 is provided with a plurality of slots 6 disposed opposite to a plurality of mounting holes 5, and the mounting holes 5 and the slots 6 are attached with bolts 4. The blade 1 and the mounting plate 3 are integrally formed, adopting casting molding, convenient in production and manufacture, simple in process and high in efficiency, and at the same time, the joint cost of the two is better, and the breakage or looseness between the blade 1 and the mounting plate 3 is avoided. The phenomenon is obtained to ensure the normal use of the blade 1. The width of the mounting plate 3 is the same as the width of the hub 2, and the long sides of the adjacent two mounting plates 3 are butted to each other. The edges of the adjacent mounting plates 3 are butted, wherein the mounting plate 3 has an arc-shaped structure, and the plurality of mounting plates 3 are spliced into a cylindrical structure surrounding the periphery of the hub 2, It is a split structure, but after the mounting plate 3 is spliced with the hub 2, it still forms a complete structure, which is easy to install, and there is no gap after installation. The connecting end of the blade 1 and the mounting plate 3 is disposed in the middle of the mounting plate 3, and a plurality of mounting holes 5 on both sides of the blade 1 are symmetrically disposed. A mutual force is generated between the blade 1 and the water, and the corresponding force acts on the mounting plate 3 through the blade 1. Since the blade 1 and the hub 2 are in a separate structure, the mounting plate 3 and the hub 2 are in the split structure, the blade 1 is placed in the middle position, and the force of the blade 1 on the mounting plate 3 is uniform. Correspondingly, the symmetrical mounting holes 5 are fixed on the mounting plates 3 on both sides of the blade 1 to avoid damage caused by excessive partial force of the mounting plate 3, and the service life of the blades 1 is longer. Preferably, the mounting plate 3 is provided with mounting holes 5 at the edges thereof, and the mounting holes 5 at the edges of the mounting plate 3 are evenly distributed. The blade 1 is inclined at the middle of the mounting plate 3, and the mounting plate 3 is divided into approximately two triangular regions by the blade 1, and corresponding mounting holes 5 are provided at the edges in the triangular region, and mounting holes 5 are also provided in the middle portion. In this form, the mounting plate 3 can be fixed more firmly. In the specific operation method, when the blade 1 is worn, needs to be repaired or replaced, and the ballast water is adjusted to make the ship have sufficient trim to make the propeller out of the water surface. At this time, the maintenance and repair operation can be performed, and the corresponding blade is removed. The bolt 4 of 1 separates the blade 1 from the hub 2, and the worker repairs the blade 1 or replaces the new blade 1.

Patent document JP1979070590Adiscloses a mount section 11 for a propeller blade 2 is formed integral at one end of a propeller shaft 4 connected to the main engine 10 through a coupling 7 and an intermediate shaft 8. On the circumference of the mount section 11, a plurality of propeller blades 2 are planted and fixed with a bolt 12, while a propeller cap 3 is mounted to the end of the mount section 11 with a bolt 13. In addition, the periphery of the mount section 11 is provided with an anti-corrosion metal 14 and a coating material 15. With such an arrangement, even after a ladder 1 is installed, the propeller blades can be mounted to the section 11 with ease. With the driving of the main engine, the propeller blades are rotated to propel the ship.

Patent publication GB1482375 discloses a marine propeller assembly comprising a shaft having formed integrally with it a hollow cylindrical hub for the attachment of separate propeller-blades, which have palms seated on the external surface of the hub and which are attached by bolts or studs extending through the hub into the said palms and secured from inside the former. The palms may be seated on a cylindrical external surface of the hub or on flats provided on the external surface of the hub. The studs 5 are passed from inside the hub 2 through plain holes 6 in the hub wall and are screwed into holes 7 in the palm 3. Protection of the steel hub 2 against sea water is provided by an annular plate 13 secured to the forward ends of the palms 3 and having a collar 14 engaged over the adjacent end portion, itself provided with a protective covering 15, of the hollow shaft 1, and by a circular plate 16 secured to the after end of the hub 2. The parts 13-16 are made of a corrosion-resistant material, such as manganese aluminium bronze. Gaps 17 left between the palms 3 are sealed by corrosion- resistant sealing strips 18 inserted in recesses 19 in or below the gaps. A filling compound, for example polystyrene, is injected below the strips and into the lower port of the gaps to seal off the hub 2 and studs 5 from the water. Holes 20 closed by plugs 21 and serving for the pumping in of the compound are then covered by the plate 16. The gaps 17 themselves may also be filled to maintain the hub profile.

As a conclusion of prior art available there is high potential in BUP design. However, the prior art BUP designs seem to have some disadvantages in comparison to fixed pitch propellers (FPP). One is a potentially higher cost due to increased number and more expensive parts. The other disadvantage the prior art does not seem to solve is a lower hydrodynamic efficiency due to the bigger hub design needed for the attachment of the blades. By improving the BUP design on these points it would make the BUP the preferred choice over a FPP in many cases.

An object of the invention is to provide a marine vessel propeller to convert an engine rotational power into a propulsive thrust when in use and wherein the propeller is of a built-up type with attachable/detachable propeller blades. It is an object of the invention to provide a BUP having improved power transmission capability in a relatively slim hub design to improve the hydrodynamic efficiency. Further an object of the invention it to provide a BUP having improved corrosion resistance. Still another object is to provide a BUP that is relatively inexpensive to manufacture and in which the performance is considerably improved compared to the prior art solutions.

### Disclosure of the Invention

Objects of the invention can be met substantially as is disclosed in the independent claims and in the other claims describing more details of different embodiments of the invention. An embodiment of the invention is a marine vessel propeller to convert engine rotational power into propulsive thrust when in use and wherein the propeller is of a built-up propeller (BUP) type arranged in a circular array of propeller blades, wherein the propeller blade is a single piece comprising a blade part and a base part. The base part has a generally circular inner surface in which there is arranged a number of radially extending cylindrical indents provided with planar end wall and fastening holes arranged through the base part at the location of the indents, a cylindrical insert is provided with a hole parallel to a longitudinal axis of the insert and arranged to fit into the indent, such that the propeller blades are attachable to a propeller shaft by means of fastening bolts through the fastening bolt holes and inserts.

The presented embodiment enables the propeller blades to be attached to a propeller shaft in such a way that combined base part and propeller shaft i.e. parts corresponding a conventional hub, has a relatively compact diameter corresponding to the power transmission capability and has a streamlined and flush outer contour. This means better hydrodynamic efficiency.

Furthermore, as the propeller is of a built-up propeller (BUP) type arranged in a circular array of propeller blades, the circular array is most suitably divided in segments to match to the designed number of propeller blades such as four, five or six blades corresponding 90 degrees, 72 degrees or 60 degrees segments. The propeller blade is a single piece comprising a blade part and a base part, typically made of a cast metal such as stainless steel or bronze.

The propeller blade base part has a generally circular inner surface. This feature has an effect to the overall design of the hub, the propeller shaft may be made circular and relatively small in diameter while the base part has even thickness that is beneficial in giving good strength properties within compact dimensions especially when done as a cast piece. The inner surface of the base part is preferably intended not to be in direct contact with propeller shaft when assembled but all contact is established via inserts. This enables conformal protective coating against corrosion, especially galvanic corrosion if the propeller blade and propeller shaft are of different material having different electropotential.

According to an embodiment of the invention the base part has a number of radially extending cylindrical indents provided with planar end wall and fastening holes arranged through the base part at the location of the indents. These indents form the support and base of the propeller blade when fastened to the propeller shaft. The indents size together with positioning and number, are designed so that the surface area of the planar end wall provides enough area, when fastening bolts properly tightened, to bear all the load the engine delivers with a safety margin, for example to bear the load of propeller hitting an ice floe.

The inserts fitted into the indents are arranged to bear the fastening bolt tensioning load between the base part and the propeller shaft. According to the invention as defined in independent claim 1, the insert has cylindrical overall shape, through-hole for fastening bolt and two parallel planes defining the insert thickness that defines a clearance between the base part inner surface and the propeller shaft when tightened for use. Thus the thickness of the insert is designed to be greater than the distance between the planar end walls of indents in the base part and in the propeller shaft (if the propeller blade is put on its position without inserts). It is intended to create a clearance between the base part inner surface and the propeller shaft outer surface. This enables use of soft materials such as polymer coatings or layers as a corrosion protection layer because the corrosion protection layer does not participate in delivering the forces between the propeller shaft and the blade. The contact and load delivery from the propeller shaft though cylindrical inserts to the base part and further to the blade part (and ending to the water) is now very accurate due solid construction and even possible to calculate accurately in strength sense.

This provides a marine vessel propeller which performance is considerably improved in terms of power transmission, corrosion resistance and manufacturability.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated. The novel features which are considered as characteristic of the invention are set forth in particular in the appended claims.

### Brief Description of Drawings

In the following, the invention will be described with reference to the accompanying exemplary, schematic drawings, in which
Figure 1 illustrates a marine vessel propeller according to an embodiment of the invention,
Figure 2 illustrates an assembly of marine vessel propeller according to another embodiment of the invention,
Figure 3 illustrates details of fastening arrangement in marine vessel propeller according to still another embodiment of the invention,

### Detailed Description of Drawings

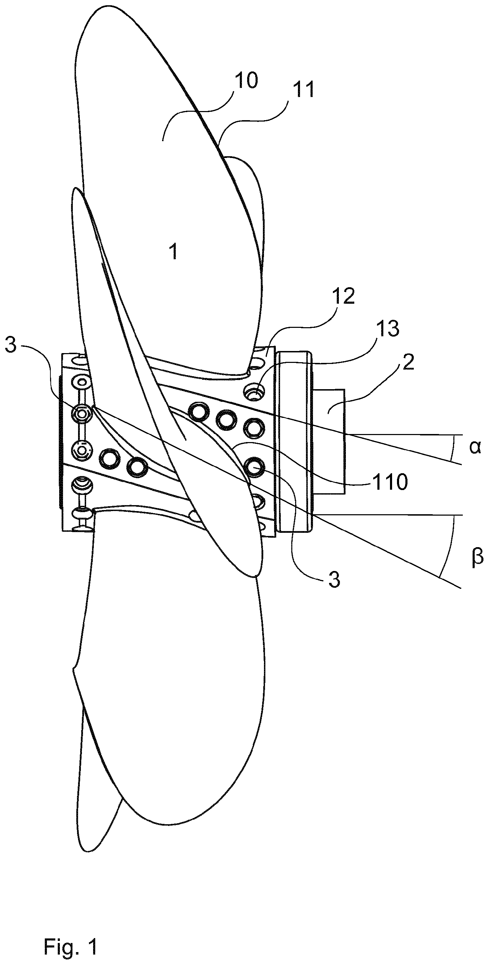

Figure 1 depicts schematically a marine vessel propeller 1 to convert engine rotational power into propulsive thrust when in use and wherein the propeller is of a built-up propeller (BUP) type arranged in a circular array of propeller blades 10, such as four, five or six propeller blades forming the array, wherein the propeller blade 10 is a single piece comprising a blade part 11 and a base part 12. In this embodiment the propeller blade 10 base part 12 is slanted in a slant angle α in axial direction of the propeller shaft 2 so that the foot of the blade part 110 configured in a pitch angle β in relation to the axial direction of the propeller shaft 2 fits on the outer surface of the base part 12. The propeller blades 10 are attachable to a propeller shaft 2 by means of fastening bolts 3 through the fastening holes 13

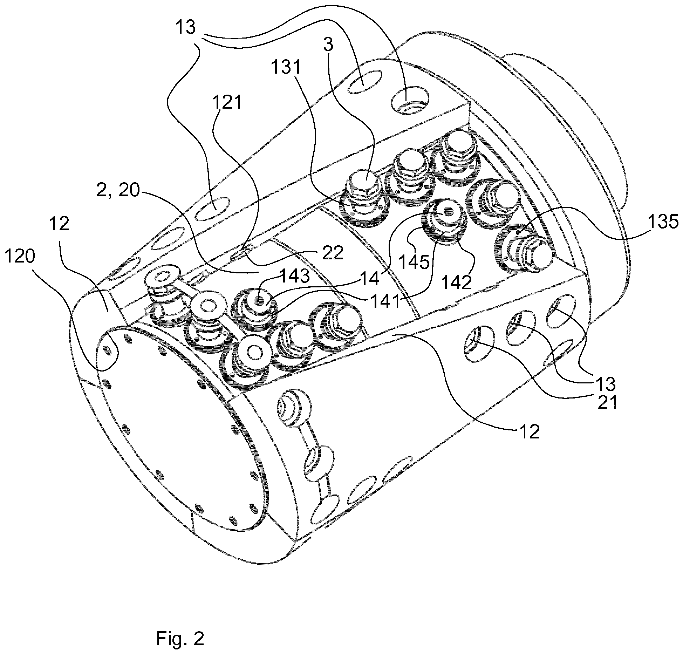

In Figure 2 it is presented an embodiment of an internal construction wherein one propeller blade, its base part and all blade parts are not shown to improve the view and clarity of the shown embodiment. Instead of the base part, there is shown one embodiment of attachment means. The base part 12 has a generally circular inner surface 120 in which there is arranged a number of radially extending cylindrical indents 121 provided with planar end wall and fastening holes 13 arranged through the base part 12 at the location of the indents 121, a cylindrical insert 131 is provided with a hole parallel to a longitudinal axis of the insert 131 and arranged to fit into the indent 121, such that the propeller blades 10 are attachable to a propeller shaft 2 by means of fastening bolts 3 through the fastening holes 13 and inserts 131. The inserts may be attached to the shaft 2 (or to the base part 12) with attaching screws 135 or corresponding means.

In figure 2 it is also presented an embodiment where each propeller blade 10 is configured to receive at least two dowels 14, one by a rear part of the base part 12 and one by a front part of the base part 12, the dowels 14 are arranged parallel to each other to define the mounting direction of the propeller blade 10 for assembly. Furthermore, each dowel 14 is provided with a dowel insert 141 to disconnect an anode/cathode-coupling between the propeller shaft 2 and the base part 12 by providing a sealing 142 disconnecting the propeller shaft outer surface 20 and inner surface 120 of said base part 12. The sealing 142 also protects the dowel 14 from sea water contact.

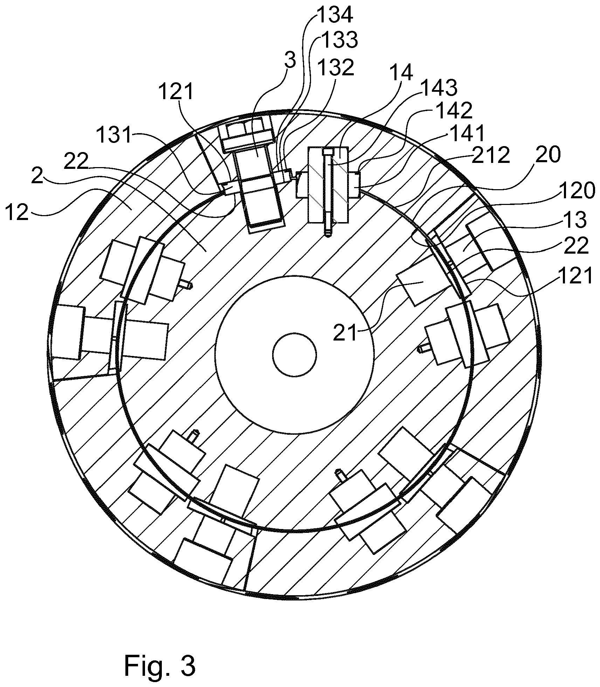

In figure 3 it is presented a cross sectional view of a propeller embodiment that is of a built-up propeller (BUP) type arranged in a circular array of propeller blades 10, here five propeller blades (only base parts 12 shown in fig. 3) forming the array. The base part 12 has a generally circular inner surface 120 in which there is arranged a number of radially extending cylindrical indents 121 provided with planar end wall and fastening holes 13 arranged through the base part 12 at the location of the indents 121, a cylindrical insert 131 is provided with a hole parallel to a longitudinal axis of the insert 131 and arranged to fit into the indent 121, such that the propeller blades 10 are attachable to a propeller shaft 2 by means of fastening bolts 3 through the fastening holes 13 and inserts 131. The insert 131 has cylindrical overall shape, through-hole for a fastening bolt 3 and two parallel planes 133, 134 defining the insert 131 thickness that defines a clearance 212 between the base part 12 inner surface 120 and the propeller shaft 2 when tightened for use. The inserts 131 are arranged to bear the fastening bolt 3 tensioning load between the base part 10 and the propeller shaft 2. The base part 12 planar indents 121 are perpendicular to radial direction of the circular inner surface 120. When assembling the propeller blade, it is easiest if the insert 131 is fit to be received and preferably attached on a planar indent 22 of the shaft 2 and the propelled blade is moved only as such. Preferably also the dowels are fastened to the propeller shaft 2 with suitable dowel fastener 143, such as a bolt or other similar means.

As presented in Fig. 3, In addition to the load bearing function of the insert 131 it may also have another function. The insert 131 is arranged to disconnect an anode/cathode-coupling between the propeller shaft 2 and the base part 10 of the propeller blade by providing a sealing 132 disconnecting the surfaces 20 of said shaft 2 and inner surface 120 of said base part 12. Furthermore, by using inserts 131 that bear all forces between the shaft 2 and the propeller blade 10, the propeller shaft 2 may be provided with a coating to disconnect an anode/cathode-coupling between the propeller shaft 2 and the propeller blade 10. The clearance 212 between the base part 12 inner surface 120 and the propeller shaft 2 is the available space for a coating to disconnect an anode/cathode-coupling between the propeller shaft 2 and the propeller blade 10 by preventing the contact of seawater to the shaft 2. Indeed, the base part 12 inner surface 120 is isolated from galvanic connection to the propeller shaft 2. There is a need for a protective coating that will last years in a marine environment, at least 5 years, preferably 15 years or a lifetime. The presently known protective coatings to fulfil this requirement are relatively "soft". The solution is then provided by the combination of the inserts and a simple soft protective coating because the inserts take away any requirements with respect to load carrying from the protective coating. Due to the design described here one is not limited to hard protective coatings (e.g. sprayed polyurethane, epoxy or electroplating) that are capable of carrying the load between the vessel engine and the propeller blade, but one can also use softer corrosion resistant coatings that provide longer protection. Naturally this is more relevant when the propeller blade 10 material is not the same material as the shaft 2 and these may form an anode/cathode pair. With a marine vessel propeller in seawater it will practically always have to deal with more noble materials and less noble materials i.e. having different electropotential. In a normal case the propeller shaft being the less noble material which needs to be protected by a corrosion resistant coating to protect it from galvanic corrosion.

The sealing 132 of the insert 131 also protects the bolts 3, especially the stressed parts of bolts 3, such as the bolt's shank, from a potential stress corrosion fatigue caused by combination of seawater and propellers continuous bending forces and stress induced by vibrations. Each dowel 14 is also provided with a dowel insert 141 to disconnect an anode/cathode-coupling between the propeller shaft 2 and the base part 12 by providing a sealing 142 disconnecting the propeller shaft outer surface 20 and inner surface 120 of said base part 12. The shaft 2 rear and front parts that are not in connection with or in vicinity of the propeller parts, can be protected by conventional means such as rings, plates and caps equipped with seals.

In Fig. 3 it is also presented an embodiment where the base part 12 comprises planar indents 121 to receive the inserts 131 and the dowel inserts 141, the indents 121 are bevelled so that the propeller blade 10 can be brought to its mounted position from one direction for tightening. As presented in the Fig. 3, the fastening bolts are in radial direction of the propeller shaft, but the dowels are necessarily not, the dowels are set in the mounting direction that is depending on the base part 12 slant angle α, as the propeller blade 10 base part 12 may be slanted in a slant angle α in axial direction.

The present marine vessel propeller may be installed to is position according to the following procedure. It is a method for installing the marine vessel propeller of a BUP type, the method comprises following steps:
- providing a propeller shaft 2 comprising planar indents 22 on the shaft 2,
- installing the inserts 131 into the indents 22 and fixing the inserts 131 to the shaft 2 for example by means of attaching screws 135,
- forming a corrosion protective insulation on the remaining exposed shaft outer surface 20,
- attaching one propeller blade 10 at the time to its position and tightening the fastening bolts 3.
The dowels 14 and dowel inserts 141 are installed preferably at the same time as the inserts 131. At the same time the dowels 14 and dowel inserts 141 are also fastened to the shaft 2 by fasteners such as screws 143. Also dowel inserts 141 may be fastened with fasteners 145, such as screws. Then dowels 14 and dowel inserts 141 are also installed and fastened to the shaft 2 prior forming the protective insulation. Thus the insulation is preferably attached to the shaft 2 before installing the propeller blades 10 but after installing the inserts and optionally dowels. This make the propeller blade installation as easy as possible and still enables very good corrosion protection to the shaft 2.

While the invention has been described herein by way of examples in connection with what are, at present, considered to be the most preferred embodiments, it is to be understood that the invention is not limited to the disclosed embodiments, but is intended to cover various combinations or modifications of its features, and several other applications included within the scope of the invention, as defined in the appended claims. The details mentioned in connection with any embodiment above may be used in connection with another embodiment when such combination is technically feasible.

Elements used in figures:
- 1: propeller
- 10: propeller blade
- 11: blade part
- 110: foot of the blade part
- 12: base part
- 120: base part inner surface
- 121: base indent
- 13: fastening hole
- 131: insert
- 132: insert sealing
- 133: insert plane
- 134: insert plane
- 135: insert attaching screw
- 14: dowel
- 141: dowel insert
- 142: dowel sealing
- 143: dowel fastener
- 145: dowel insert fastener
- 2: propeller shaft
- 20: propeller shaft outer surface
- 21: fastening bolt hole
- 22: indent for insert
- 212: clearance
- 3: fastening bolt

## Claims

1. A marine vessel propeller (1) to convert engine rotational power into propulsive thrust when in use and wherein the propeller is of a built-up propeller (BUP) type arranged in a circular array of propeller blades (10), wherein the propeller blade (10) is a single piece comprising a blade part (11) and a base part (12), **characterized in that** the base part (12) has a generally circular inner surface (120) in which there is arranged a number of radially extending cylindrical indents (121) provided with planar end wall and fastening holes (13) arranged through the base part (12) at the location of the indents (121), a cylindrical insert (131) ) has a cylindrical overall shape is provided with a through-hole for a fastening bolt (3) parallel to a longitudinal axis of the insert (131) and arranged to fit into the indent (121), such that the propeller blades (10) are attachable to a propeller shaft (2) by means of fastening bolts (3) through the fastening holes (13) and inserts (131), and the insert has two parallel planes (133, 134) defining the insert (131) thickness that defines a clearance (212) between the base part (12) inner surface (120) and the propeller shaft (2) when tightened for use.

2. A marine vessel propeller (1) according to claim 1, **characterized in that** the inserts (131) are arranged to bear the fastening bolt (3) tensioning load between the base part (10) and the propeller shaft (2).

3. A marine vessel propeller (1) according to any of the preceding claims, **characterized in that** the base part (12) planar indents (121) are perpendicular to radial direction of the circular inner surface (120).

4. A marine vessel propeller (1) according to any of the preceding claims, **characterized in that** the insert (131) is fit to be received and preferably attached on a planar indent (22) of the shaft (2).

5. A marine vessel propeller (1) according to any of the preceding claims, **characterized in that** the insert (131) is arranged to disconnect an anode/cathode-coupling between the propeller shaft (2) and the base part (12) of the propeller blade (10) by providing a sealing disconnecting the surfaces (20) of said shaft (2) and inner surface (120) of said base part (12).

6. A marine vessel propeller (1) according to any of the preceding claims, **characterized in that** the base part (12) inner surface (120) is isolated from galvanic connection to the propeller shaft (2).

7. A marine vessel propeller (1) according to any of the preceding claims, **characterized in that** the propeller blade (10) base part (12) is slanted in a slant angle (α) in axial direction of the propeller shaft (2) so that the foot of the blade part (110) configured in a pitch angle (β) in relation to the axial direction of the propeller shaft (2) fits on the outer surface of the base part (12).

8. A marine vessel propeller (1) according to any of the preceding claims, **characterized in that** each propeller blade (10) is configured to receive at least two dowels (14), one by a rear part of the base part (12) and one by a front part of the base part (12), the dowels (14) are arranged parallel to each other to define the mounting direction of the propeller blade (10) for assembly.

9. A marine vessel propeller (1) according to claim 8, **characterized in that** each dowel (14) is provided with a dowel insert (141) to disconnect an anode/cathode-coupling between the propeller shaft (2) and the base part (12) by providing a sealing (142) disconnecting the propeller shaft outer surface (20) and inner surface (120) of said base part (12).

10. A marine vessel propeller (1) according to claim 6, **characterized in that** the propeller shaft (2) is provided with an electrically insulating coating to disconnect an anode/cathode-coupling between the propeller shaft (2) and the propeller blade (10) by providing a sealing disconnecting the propeller shaft outer surface (20) and inner surface (120) of said base part (12).

11. A marine vessel propeller according to claim 1, **characterized in that** the base part (12) comprises planar indents (121) to receive the inserts (131) and the dowel inserts (141), the indents (121) are bevelled so that the propeller blade (10) can be brought to its mounted position from one direction for tightening.

12. A marine vessel propeller according to claim 1, **characterized in that** the propeller blade (10) base part (12) is slanted in a slant angle (α) in axial direction.

13. A method for installing the marine vessel propeller of any of the preceding claims, the method comprises following steps:
- providing a propeller shaft (2) comprising planar indents (22) on the shaft (2),
- installing the inserts (131) into the indents (22) and fixing the indents (131) to the shaft (2) for example by means of attaching screws (135),
- forming a corrosion protective insulation on the remaining exposed shaft outer surface (20),
- attaching one propeller blade at the time to its position and tightening the fastening bolts (3).

14. A method according to the claim 13 further comprising that dowels (14) and dowel inserts (141) are installed and fastened to the shaft (2) prior forming the protective insulation.

## Patentansprüche

1. Seeschiffspropeller (1), um Motor-Rotationsenergie in Vortriebsschub umzuwandeln, wenn er in Gebrauch ist, und wobei der Propeller von einem Typ eines zusammengesetzten Propellers (built-up propeller - BUP) ist, der in einer kreisförmigen Anordnung von Propellerflügeln (10) angeordnet ist, wobei der Propellerflügel (10) ein einziges Stück ist, das einen Flügelteil (11) und einen Basisteil (12) umfasst, **dadurch gekennzeichnet, dass** der Basisteil (12) eine im Allgemeinen kreisförmige Innenfläche (120) aufweist, in der eine Anzahl von sich in Radialrichtung erstreckenden zylindrischen Vertiefungen (121) angeordnet ist, die mit ebener Stirnwand und Befestigungslöchern (13) versehen sind, die an der Position der Vertiefungen (121) durch den Basisteil (12) angeordnet sind, ein zylindrischer Einsatz (131) eine zylindrische Gesamtform aufweist, mit einem Durchgangsloch für einen Befestigungsbolzen (3) parallel zu einer Längsachse des Einsatzes (131) versehen und angeordnet ist, um derart in die Vertiefung (121) zu passen, dass die Propellerflügel (10) mit Hilfe von Befestigungsbolzen (3) durch die Befestigungslöcher (13) und die Einsätze (131) an einer Propellerwelle (2) zu befestigen sind, und der Einsatz zwei parallele Ebenen (133, 134) aufweist, welche die Dicke des Einsatzes (131) definieren, die einen Zwischenraum (212) zwischen der Innenfläche (120) des Basisteils (12) und der Propellerwelle (2) definiert, wenn er zum Gebrauch festgezogen ist.

2. Seeschiffspropeller (1) nach Anspruch 1, **dadurch gekennzeichnet, dass** die Einsätze (131) angeordnet sind, um die Spannlast des Befestigungsbolzens (3) zwischen dem Basisteil (10) und der Propellerwelle (2) zu tragen.

3. Seeschiffspropeller (1) nach einem der vorhergehenden Ansprüche, **dadurch gekennzeichnet, dass** die ebenen Vertiefungen (121) des Basisteils (12) senkrecht zu einer radialen Richtung der kreisförmigen Innenfläche (120) sind.

4. Seeschiffspropeller (1) nach einem der vorhergehenden Ansprüche, **dadurch gekennzeichnet, dass** der Einsatz (131) passend ist, um an einer ebenen Vertiefung (22) der Welle (2) aufgenommen und vorzugsweise an derselben befestigt zu werden.

5. Seeschiffspropeller (1) nach einem der vorhergehenden Ansprüche, **dadurch gekennzeichnet, dass** der Einsatz (131) angeordnet ist, um eine Anoden-/Kathoden-Kopplung zwischen der Propellerwelle (2) und dem Basisteil (12) des Propellerflügels (10) zu trennen, durch Bereitstellen einer Dichtung, welche die Oberflächen (20) der Welle (2) und die Innenfläche (120) des Basisteils (12) trennt.

6. Seeschiffspropeller (1) nach einem der vorhergehenden Ansprüche, **dadurch gekennzeichnet, dass** die Innenfläche (120) des Basisteils (12) von einer galvanischen Verbindung mit der Propellerwelle (2) isoliert ist.

7. Seeschiffspropeller (1) nach einem der vorhergehenden Ansprüche, **dadurch gekennzeichnet, dass** der Basisteil (12) des Propellerflügels (10) in einem Neigungswinkel (α) in einer Axialrichtung der Propellerwelle (2) geneigt ist, so dass der Fuß des Flügelteils (110), der in einem Steigungswinkel (β) im Verhältnis zu der Axialrichtung der Propellerwelle (2) konfiguriert ist, auf die Außenfläche des Basisteils (12) passt.

8. Seeschiffspropeller (1) nach einem der vorhergehenden Ansprüche, **dadurch gekennzeichnet, dass** jeder Propellerflügel (10) dafür konfiguriert ist, mindestens zwei Passstifte (14), einen durch einen hinteren Teil des Basisteils (12) und einen durch einen vorderen Teil des Basisteils (12), aufzunehmen, wobei die Passstifte (14) parallel zueinander angeordnet sind, um die Montagerichtung des Propellerflügels (10) zum Zusammenbau zu definieren.

9. Seeschiffspropeller (1) nach Anspruch 8, **dadurch gekennzeichnet, dass** jeder Passstift (14) mit einem Passstifteinsatz (141) versehen ist, um eine Anoden-/Kathoden-Kopplung zwischen der Propellerwelle (2) und dem Basisteil (12) zu trennen, durch Bereitstellen einer Dichtung (142), welche die Propellerwellenaußenfläche (20) und die Innenfläche (120) des Basisteils (12) trennt.

10. Seeschiffspropeller (1) nach Anspruch 6, **dadurch gekennzeichnet, dass** die Propellerwelle (2) mit einer elektrisch isolierenden Beschichtung versehen ist, um eine Anoden-/Kathoden-Kopplung zwischen der Propellerwelle (2) und dem Propellerflügel (10) zu trennen, durch Bereitstellen einer Dichtung, welche die Propellerwellenaußenfläche (20) und die Innenfläche (120) des Basisteils (12) trennt.

11. Seeschiffspropeller nach Anspruch 1, **dadurch gekennzeichnet, dass** der Basisteil (12) ebene Vertiefungen (121) umfasst, um die Einsätze (131) und die Passstifteinsätze (141) aufzunehmen, wobei die Vertiefungen (121) angeschrägt sind, so dass der Propellerflügel (10) aus einer Richtung zum Festziehen zu seiner montierten Position gebracht werden kann.

12. Seeschiffspropeller nach Anspruch 1, **dadurch gekennzeichnet, dass** der Basisteil (12) des Propellerflügels (10) in einem Neigungswinkel (α) in der Axialrichtung geneigt ist.

13. Verfahren zum Installieren des Seeschiffspropellers nach einem der vorhergehenden Ansprüche, wobei das Verfahren die folgenden Schritte umfasst:
- Bereitstellen einer Propellerwelle (2), die ebene Vertiefungen (22) an der Welle (2) umfasst,
- Installieren der Einsätze (131) in den Vertiefungen (22) und Fixieren der Einsätze (131) an der Welle (2) zum Beispiel mit Hilfe von Befestigungsschrauben (135),
- Bilden einer Korrosionsschutzisolierung auf der verbleibenden freiliegenden Wellenaußenfläche (20),
- Befestigen eines Propellerflügels nach dem anderen an seiner Position und Festziehen der Befestigungsbolzen (3) .

14. Verfahren nach Anspruch 13, das ferner umfasst, dass vor dem Bilden der schützenden Isolierung Passstifte (14) und Passstifteinsätze (141) an der Welle (2) installiert und befestigt werden.

## Revendications

1. Hélice de navire (1) pour convertir la puissance de rotation du moteur en poussée de propulsion lorsqu'elle est utilisée et dans laquelle l'hélice est de type hélice à pales assemblées (BUP) agencées en une rangée circulaire de pales d'hélice (10), dans lequel la pale d'hélice (10) est une seule pièce comprenant une partie de pale (11) et une partie de base (12), **caractérisé en ce que** la partie de base (12) présente une surface intérieure généralement circulaire (120) dans laquelle sont agencées un nombre d'indentations s'étendant radialement (121) dotées d'une paroi d'extrémité planaire et de trous de fixation (13) agencés à travers la partie de base (12) à l'emplacement des indentations (121), un insert cylindrique (131) présente une forme globale cylindrique et est doté d'un trou traversant pour un boulon de fixation (3) parallèle à un axe longitudinal de l'insert (131) et agencé pour s'insérer dans l'indentation (121), de telle façon que les pales d'hélice (10) peuvent être fixées à un arbre d'hélice (2) au moyen de boulons de fixation (3) à travers les trous de fixation (13) et les inserts (131), et l'insert présente deux plans parallèles (133, 134) définissant l'épaisseur de l'insert (131) qui définit un dégagement (212) entre la surface intérieure (120) de la partie de base (12) et l'arbre d'hélice (2) lorsqu'il est serré en utilisation.

2. Hélice de navire (1) selon la revendication 1, **caractérisé en ce que** les inserts (131) sont agencés pour supporter la charge de tension des boulons de fixation (3) entre la partie de base (10) et l'arbre d'hélice (2).

3. Hélice de navire (1) selon l'une quelconque des revendications précédentes, **caractérisé en ce que** les indentations planaires (121) de la partie de base (12) sont perpendiculaires à la direction radiale de la surface intérieure circulaire (120).

4. Hélice de navire (1) selon l'une quelconque des revendications précédentes, **caractérisé en ce que** l'insert (131) est approprié pour être reçu et de préférence fixé sur une indentation planaire (22) de l'arbre (2).

5. Hélice de navire (1) selon l'une quelconque des revendications précédentes, **caractérisé en ce que** l'insert (131) est agencé pour déconnecter un couplage anode/cathode entre l'arbre d'hélice (2) et la partie de base (12) de la pale d'hélice (10) en fournissant une étanchéité déconnectant les surfaces (20) dudit arbre (2) et la surface intérieure (120) de ladite partie de base (12).

6. Hélice de navire (1) selon l'une quelconque des revendications précédentes, **caractérisé en ce que** la surface intérieure (120) de la partie de base (12) est isolée de la connexion galvanique vers l'arbre d'hélice (2) .

7. Hélice de navire (1) selon l'une quelconque des revendications précédentes, **caractérisé en ce que** la partie de base (12) de pale d'hélice (10) est chanfreinée dans un angle de chanfrein (α) en direction axiale de l'arbre d'hélice (2) de façon à ce que le pied de la partie de pale (110) configuré dans un angle de pas (β) par rapport à la direction axiale de l'arbre d'hélice (2) s'adapte sur la surface extérieure de la partie de base (12).

8. Hélice de navire (1) selon l'une quelconque des revendications précédentes, **caractérisé en ce que** chaque pale d'hélice (10) est configurée pour recevoir au moins deux goujons (14), un par une partie arrière de la partie de base (12) et un par une partie avant de la partie de base (12), les goujons (14) sont agencés parallèles entre eux pour définir la direction de montage de la pale d'hélice (10) pour le montage.

9. Hélice de navire (1) selon la revendication 8, **caractérisé en ce que** chaque goujon (14) est doté d'un insert de goujon (141) pour déconnecter un couplage anode/cathode entre l'arbre d'hélice (2) et la partie de base (12) en fournissant une étanchéité (142) déconnectant la surface extérieure (20) de l'arbre d'hélice et la surface intérieure (120) de ladite partie de base (12).

10. Hélice de navire (1) selon la revendication 6, **caractérisé en ce que** l'arbre d'hélice (2) est doté d'un revêtement isolant électrique pour déconnecter un couplage anode/cathode entre l'arbre d'hélice (2) et la pale d'hélice (10) en fournissant une étanchéité déconnectant la surface extérieure (20) de l'arbre d'hélice et la surface intérieure (120) de ladite partie de base (12).

11. Hélice de navire (1) selon la revendication 1, **caractérisé en ce que** la partie de base (12) comprend des indentations planaires (121) pour recevoir les inserts (131) et les inserts de goujons (141), les indentations (121) sont biseautées de façon à ce que la pale d'hélice (10) puisse être amenée à sa position montée depuis une direction pour le serrage.

12. Hélice de navire (1) selon la revendication 1, **caractérisé en ce que** la partie de base (12) de la pale d'hélice (10) est chanfreinée dans un angle de chanfrein (α) en direction axiale.

13. Procédé de montage de l'hélice de navire selon l'une quelconque des revendications précédentes, le procédé comprenant les étapes suivantes :
- fournir un arbre d'hélice (2) comprenant des indentations planaires (22) sur l'arbre (2),
- monter les inserts (131) dans les indentations (22) et fixer les indentations (131) à l'arbre (2) par exemple au moyen de vis de fixation (135),
- former une isolation protectrice contre la corrosion sur la surface extérieure d'arbre (20) exposée restante,
- fixer une pale d'hélice à la fois dans sa position et serrer les boulons de fixation (3).

14. Procédé selon la revendication 13, comprenant en outre que les goujons (14) et les inserts de goujon (141) sont montés et fixés à l'arbre (2) avant de former l'isolation protectrice.
